# FASCICULE DE BREVET EUROPEEN

(11) **EP 3 260 028 B1**
(45) Date de publication et mention de la délivrance du brevet: **24.10.2018**
(21) Numéro de dépôt: 17168024.2
(22) Date de dépôt: 25.04.2017
(51) Int. Cl.: A47J 45/07

(54) **DISPOSITIF DE PRÉHENSION AMOVIBLE POUR ANSE, EN FORME D'OREILLE, D'USTENSILE DE CUISINE**
OHRENFÖRMIGE ABNEHMBARE GREIFVORRICHTUNG FÜR GRIFF EINES KOCHGERÄTS
REMOVABLE GRIPPING DEVICE FOR HANDLE, IN THE FORM OF AN EARLOBE, OF A KITCHEN UTENSIL

(30) Priorité: 30.05.2016 FR 1654846; 21.07.2016 FR 1656945
(43) Date de publication de la demande: 27.12.2017
(73) Titulaire: CRISTEL, 25490 Fesches le Chatel (FR)
(72) Inventeur: DODANE, Paul, 25490 Fesches le Chatel (FR); DROUVILLE, Pascal, 90400 Danjoutin (FR)
(74) Mandataire: Hugues, Catherine

(56) Documents cités:
- EP-A2- 0 458 254
- EP-B1- 1 315 440
- US-A- 3 878 584
- US-B1- 6 260 733
- US-B1- 6 694 868

## Description

L'invention concerne un dispositif de préhension amovible pour anse, en forme d'oreille, d'ustensile de cuisine, dispositif comportant un boitier comprenant un logement sous forme d'une fente de largeur adaptée à l'épaisseur de l'anse pour accueillir au moins en partie cette dernière par emboitement et avec un jeu fonctionnel, ce boitier étant encore pourvu d'un loquet apte à occuper au moins une position verrouillée et une position déverrouillée pour, selon le cas, bloquer ou débloquer le dispositif de préhension amovible sur cette anse.

La présente invention trouvera son application dans le domaine des ustensiles de cuisine et a trait, plus particulièrement, à des dispositifs de préhension amovibles pour de tels ustensiles.

On connait différents types d'ustensiles de cuisine, tels que casseroles, poêles ou marmites, qui se distinguent, entre autres, par leurs tailles, mais aussi leurs moyens de préhension. Ainsi, il est courant que de tels ustensiles comportent, en tant que moyens de préhension, une seule et unique poignée, s'étendant sensiblement radialement en périphérie externe. L'usager peut donc saisir cette dernière au moyen d'une, voire deux mains, selon le poids à soulever.

Comparativement à la section du contenant, celle de la poignée est relativement réduite de sorte que le couple résistant susceptible d'être exercé par certaines personnes au travers de cette poignée en cas de basculement de l'ustensile de cuisine est relativement faible.

C'est la raison pour laquelle les ustensiles de plus grande dimension sont équipés, selon le cas, d'une poignée et d'une anse ou de deux anses, disposées de manière diamétralement opposées en périphérie du contenant. Ces anses présentent encore l'avantage d'un encombrement moindre en comparaison à une poignée.

Cependant, la particularité des anses consiste en ce qu'elles s'étendent à proximité immédiate des parois de l'ustensile de cuisine. Aussi, elles sont souvent soumises à de très fortes températures, sous l'effet de la chaleur diffusée par le dispositif de chauffe sur lequel repose l'ustensile

Il est très fréquent, par ailleurs, de réaliser ces anses en un matériau métallique permettant de disposer l'ustensile de cuisine dans un four, contrairement à une poêle ou une casserole pourvue d'une poignée encombrante, à moins que cette dernière soit prévue amovible.

La problématique réside, par conséquent, à pouvoir saisir un tel ustensile de cuisine au travers des anses qui l'équipent et qui peuvent être en température. En fait, il est indispensable d'utiliser des éléments de protection, tels que manique pour manipuler un ustensile de cuisine à anse métallique.

Il est d'ores et déjà connu, notamment au travers du document EP-1 315 440, un dispositif de préhension amovible pour saisir, soulever, manipuler, verser des ustensiles de cuisine ayant deux anses diamétralement opposées sous forme d'oreille. Plus particulièrement, ces anses se présentent sous forme de plats métalliques, de section rectangulaire ou au contour arrondi, rapportés sensiblement horizontalement de part et d'autre et extérieurement au contenant de l'ustensile de cuisine de manière. Quant au dispositif de préhension, il comporte une paire de coquilles en un matériau thermiquement isolant susceptibles de coiffer de manière amovible ces plats métalliques en forme de anse. Chaque coquille présente un logement sous forme d'une fente débouchant latéralement et aux dimensions ajustées pour accueillir, avec un jeu fonctionnel suffisant, une telle anse en forme d'oreille. A noter encore, qu'une coquille de ce dispositif de préhension amovible est équipée d'un dispositif de verrouillage/déverrouillage sous forme de moyens d'accrochage susceptible de coopérer avec une lumière ménagée dans une anse pour, selon le cas, verrouiller ou déverrouiller une coquille sur cette dernière.

Tout particulièrement, le dispositif de verrouillage/déverrouillage est décrit, dans ce document antérieur, sous forme d'une plaque montée basculante, à la manière d'un verrou, dans une chambre de débattement ménagée à l'intérieur de la coquille. Cette plaque est montée pivotante autour d'un axe parallèle au plan de la fente pour, par basculement dans sa position de verrouillage, coopérer, au moyen d'un bec d'accrochage, avec ladite lumière dans l'anse, une fois la coquille emboitée sur cette dernière.

Une ouverture sur le dessus de cette coquille permet d'accéder à ce dispositif de verrouillage/déverrouillage pour le repousser en position déverrouillée, contre l'action de moyens de rappel élastique, tendant à le ramener systématiquement en position de verrouillage. A noter que l'extrémité en forme de bec du verrou conduit tout naturellement à le repousser en direction de sa position déverrouillée sous l'impulsion d'une anse, au moment d'engager la coquille sur cette dernière.

Si la solution décrite dans ce document EP-1 315 440 prévoit la conception d'une coquille par assemblage de deux demi-coquilles venant emprisonner le dispositif de verrouillage/déverrouillage, tout en délimitant, chacune, le logement en forme de fente, i est connu par le document EP-2 665 399 un autre mode de réalisation. Dans ce cas, la coquille adopte la forme d'un boitier comportant, tant le logement en forme de fente pour accueillir l'anse de l'ustensile de cuisine, que celui constituant le siège du montage pivotant de la plaque ou verrou du dispositif de verrouillage/déverrouillage. Ce boitier est, dans ce cas, refermé par un couvercle.

Quelles que soient ces solutions selon l'état de la technique, le logement en forme de fente est dimensionné au plus juste par rapport aux caractéristiques de l'anse en forme d'oreille, ceci au jeu fonctionnel près, nécessaire pour permettre l'emboitement et le déboitement du dispositif de préhension en forme de coquille sur cette anse. A noter, d'ailleurs, que cette dernière, définie, usuellement, par une plaque métallique découpée et/ou emboutie répond, nécessairement, à des tolérances de fabrication dont il convient de tenir compte pour le dimensionnement de ce logement en forme de fente pour garantir, dans tous les cas, même extrêmes, un emboitement aisé, grâce au jeu fonctionnel.

On comprend aussi qu'en raison de ces tolérances de fabrications, ce jeu fonctionnel peut être excessif, de sorte qu'une mobilité excessive du dispositif de préhension sur l'anse puisse être ressentie par un usager comme un manque de sécurité et un risque de déversement de l'ustensile de cuisine.

Le dispositif de verrouillage/déverrouillage qui, s'il remédie efficacement à ce risque de détachement du dispositif de préhension d'une anse, ne peut suppléer à cette sensation de mobilité. D'autant que le verrou et son bec d'accrochage doivent, eux-mêmes, être dimensionnés pour que leur coopération avec l'ouverture prévue à cette effet dans l'anse soit assurée, quelles que soient les tolérances de fabrication et le respect des cotes d'implantation de l'ouverture dans cette anse.

Une solution équivalente avec les mêmes inconvénients a été décrite dans le document US 6.694.868.

Dans le document US 6.260.733, il est décrit un dispositif de poignée amovible où le verrouillage de cette dernière sur l'anse en forme d'anneau est assuré par une lame élastique qui ne peut remédier au problème de mobilité entre ce dispositif et l'ustensile de cuisine qu'il est amené à soulever. En effet, là encore on constate un jeu fonctionnel entre l'anse de l'ustensile de cuisine et la fente dans le dispositif de poignée, qui donne une impression d'insécurité au moment de soulever cet ustensile de cuisine.

A noter que dans le document FR 3 016 787 l'on a tenté de remédier à un problème similaire de jeu entre une poignée amovible et la patte de fixation d'un ustensile de cuisine sur laquelle cette poignée vient s'accrocher.

Dans ce cas, un organe déformable, sous forme d'une pastille en silicone écrasable, est associé à la patte d'accrochage de la poignée. Au moment où la poignée est accrochée sur le récipient et avant verrouillage de l'un sur l'autre, s'opère un écrasement de cette pastille en silicone de manière à rattraper le jeu fonctionnel habituel entre ces éléments.

Dans le document FR 3 016 788, il est décrit un état de la technique similaire, si ce n'est que la pastille en silicone est pourvue, en outre, en son centre, d'un picot de centrage prévu pour se loger dans une cavité ménagée en correspondance sur la patte de fixation du récipient.

Ainsi, au moment d'assurer la coopération entre la poignée amovible et la patte d'accrochage sur le récipient consistant, à accrocher la première sur la seconde, puis, par un effet de rotation, à rapprocher l'un et l'autre, l'usager doit exercer une pression exercée sur la poignée en direction de la patte de fixation pour assurer cet écrasement de la pastille en silicone, d'où résulte un risque de basculement de l'ustensile de cuisine.

A noter que la mise sous contrainte de cette pastille silicone rend également plus difficile l'opération inverse de déverrouillage.

Quoiqu'il en soit, cette solution selon l'état de la technique ne permet pas de résoudre la problématique du jeu fonctionnel entre un dispositif de préhension prévu pour venir s'emboiter, grâce à un logement en forme de fente, sur une anse en forme d'oreille d'un ustensile de cuisine.

Comme relevé plus haut, ce jeu fonctionnel conduit à une certaine mobilité de ce dispositif de préhension par rapport à cette anse dans une direction verticale, perpendiculaire au plan de l'anse, mais aussi dans une direction parallèle à ce plan.

C'est dans le cadre d'une première démarche inventive que l'on a cherché à répondre à cette problématique de jeu fonctionnel bidirectionnel d'un dispositif de préhension amovible, emboitable sur une anse en forme d'oreille d'ustensile de cuisine.

Dans le cadre d'une seconde démarche inventive on a pensé associer cette fonctionnalité de suppression de jeu fonctionnel, non pas au boitier du dispositif de préhension prévu pour accueillir l'anse de l'ustensile de cuisine, mais à au moins un cache de protection en matériau isolant que l'on vient monter sur ce boitier. Cette configuration permet de réaliser ce cache, soit en totalité, soit partiellement en un matériau souple susceptible de constituer, localement dans le logement en forme de fente du boitier, une contrainte élastique pour la suppression de ce jeu fonctionnel.

A cet effet, l'invention concerne un dispositif de préhension amovible pour anse en forme d'oreille d'ustensile de cuisine, comportant un boitier comprenant un logement sous forme d'une fente de largeur adaptée à l'épaisseur de l'anse pour accueillir au moins en partie cette dernière par emboitement et avec un jeu fonctionnel, ce boitier étant encore pourvu d'un loquet apte à occuper au moins une position verrouillée et une position déverrouillée pour, selon le cas, bloquer ou débloquer le dispositif de préhension amovible sur cette anse, caractérisée en ce qu'il comprend, en combinaison et indépendamment de la fonction de verrouillage/déverrouillage au moins un patin de retenue venant s'étendre au moins partiellement dans le logement en forme de fente de manière à définir dans ce dernier au moins une section de passage ajustée, avec une tolérance négative, à l'épaisseur de l'anse, au moins ce patin, dans sa partie au moins venant s'étendre dans ledit logement étant réalisé en un matériau souple pour s'effacer sous contrainte au passage de l'anse lors de l'engagement dudit dispositif sur cette dernière.

Avantageusement, ce dispositif comprend encore au moins une butée élastiquement déformable venant s'étendre au moins en partie dans ledit logement et contre laquelle vient en appui sous contrainte le bord d'extrémité de l'anse, lorsque ledit dispositif est monté sur l'anse et que les moyens d'accrochage sont en position de verrouillage.

Selon une particularité de l'invention sur le boitier est monté au moins un cache de protection par collage, sertissage et/ou par l'intermédiaire d'organes de fixation, tels que vis, rivets ou similaires.

D'autres buts et avantages de la présente invention apparaîtront au cours de la description qui va suivre se rapportant à un exemple de réalisation donné à titre indicatif non limitatif.

La compréhension de cette description sera facilitée en se référant aux dessins ci-joints dans lesquels :
- La figure 1 est une représentation schématisée et vue en plan d'un dispositif de préhension amovible selon l'invention, emboité sur une anse en forme d'oreille,
- La figure 2 est une représentation schématisée en coupe selon I-I de la figure 1,
- La figure 3 est une représentation schématisée en coupe selon II-II de la figure 1,
- La figure 4 est une représentation schématisée en coupe selon III-III de la figure 1,
- La figure 5 est une représentation schématisée en coupe selon IV-IV de la figure 1.
- La figure 6 est une représentation schématisée et en coupe selon VI-VI de la figure 2 (anse n'étant pas représentée) ;
- La figure 7 est une vue similaire à la figure 6 correspondant à un second mode de réalisation de l'invention ;
- La figure 8 est une vue en coupe selon VIII -VIII de la figure 7 ;
- La figure 9 est une représentation en perspective du mode de réalisation des patins de retenue et butées définis par des lames élastiques.

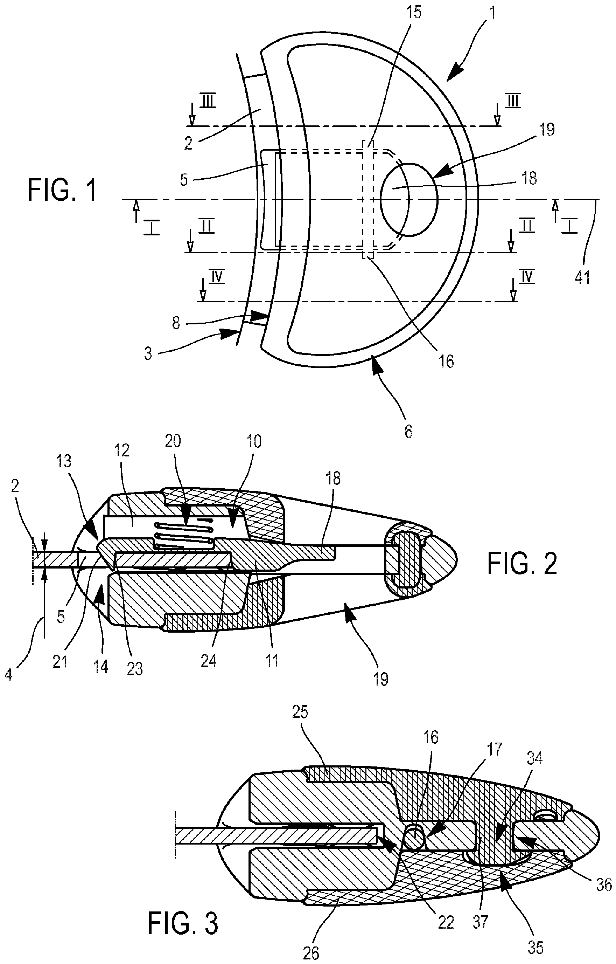

Telle que représentée dans les figures du dessin ci-joint, la présente invention concerne un dispositif de préhension amovible 1 pour une anse 2 en forme d'oreille équipant, généralement, en bordure supérieure et en périphérie externe un ustensile de cuisine 3 de type casserole, poêle, marmite ou autre et qui n'a été représentée que très partiellement sur la figure 1.

A noter qu'une telle anse 2 en forme d'oreille résulte, usuellement, d'une opération de découpe et pliage d'un plat métallique d'une épaisseur 4 déterminée. Cette anse 2 est rapportée, habituellement, de manière étanche, par sertissage, rivetage, vissage, soudage ou autre sur l'ustensile de cuisine 3. Bien évidemment, l'invention n'est nullement limitée à un tel mode de fabrication de cette anse 2. Elle peut également être obtenue par fabrication additive.

Dans cette anse 2 en forme d'oreille est généralement réalisée au moins une ouverture oblongue 5 destinée à coopérer, comme cela sera expliqué plus en détails ci-après, avec des moyens d'accrochage du dispositif de préhension amovible 1.

Quant à ce dernier, il comprend un boitier 6 comportant un logement 7 sous forme d'une fente débouchant au niveau d'un chant latéral 8 de ce boitier 6, lequel comporte, généralement, une épaisseur sensiblement plus faible par rapport à sa longueur et sa largeur.

Quant à la hauteur 9 de cette fente correspondant au logement 7, elle est adaptée à l'épaisseur 4 de l'anse 2 pour accueillir au moins en partie cette dernière avec un jeu fonctionnel dans cette direction correspondant à la largueur 9 du logement 7.

Dans la mesure où l'anse 2 s'étend usuellement dans un plan sensiblement horizontal en périphérie externe de l'ustensile de cuisine 3, il sera fait référence, dans la suite de la description pour en facilité la compréhension, de jeu suivant une direction verticale.

A noter que l'importance de ce jeu fonctionnel dépend des tolérances acceptées au niveau de l'épaisseur 4 du plat métallique dans lequel est réalisée l'anse 2, mais aussi des tolérances de fabrication, par exemple par moulage, du logement 7 dans le boitier 6. Celui-ci peut être réalisé, avantageusement, en matériau métallique, sachant que l'invention n'est nullement limitée à ce seul matériau, ce boitier 6 étant encore susceptible d'être réalisé en toute autre matière, notamment synthétique, capable de résister aux températures auxquelles peuvent être soumises les anses 2 d'un ustensile de cuisine.

Le boitier 6 accueille, également, un loquet 11 apte à occuper au moins une position verrouillée 14 et déverrouillée (non visible) pour, selon le cas, bloquer ou débloquer le dispositif de préhension amovible 1 sur une anse 2.

Substantiellement et selon un exemple de réalisation, ce loquet, formant des moyens d'accrochage 10 analogue à un verrou, se présente sous forme d'une plaque sensiblement rectangulaire, s'étendant dans un logement adapté 12 dans le boitier 6, préférentiellement de manière sensiblement parallèle au plan du logement 7. Le logement 12 est avantageusement prévu communiquant avec ce logement 7. Le loquet 11 comprend par ailleurs une extrémité 13, en forme de crochet, pour coopérer, notamment en position de verrouillage 14, avec l'ouverture oblongue 5 dans l'anse 2.

Le loquet 11 est avantageusement monté basculant dans le logement 12 autour d'un axe 15 perpendiculaire à son axe longitudinal 16.

Substantiellement, cet axe 15 est défini par des tronçons d'axe 16 s'étendant de part et d'autre sur les bords latéraux du loquet 11 et venant prendre position dans des logements formant paliers 17 ménagés à cet effet dans le boitier 6.

En direction opposée à son extrémité en forme de crochet 13, le loquet 11 est prolongé, au-delà de son axe de pivotement 15, par une languette de manipulation 18 accessible au travers d'une ouverture 19 adaptée dans le boitier 6. Finalement, au travers de cette ouverture 19 l'usager est à même de provoquer le basculement du loquet 11 autour de son axe de pivotement 15, ceci avantageusement, depuis une position de verrouillage 14 en direction d'une position de déverrouillage (non visible sur les figures), contre l'action de moyens de rappel élastique 20.

Comme visible sur la figure 2, ces moyens de rappel élastique 20, (représentés, exclusivement à titre d'exemple, sous forme d'un ressort), repoussent le loquet 11 depuis son logement 12 en direction du logement 7, donc de l'anse 2. En conséquence, la poussée exercée sur la languette de manipulation 18 tend à basculer le loquet 11 dans son logement 12, dans sa position de déverrouillage, permettant le retrait du dispositif de préhension amovible 1 par rapport à l'anse 2.

De manière avantageuse et comme visible dans les figures 3, 6 et 7, les logements formant paliers 17 sont de structure en V renversé au fond desquels sont repoussés les tronçons d'axe 16 sous l'action des moyens de rappel élastique 20 sur le loquet 11 pour éviter tout jeu préjudiciable au niveau de l'articulation de ce dernier.

Comme visible, également, sur la figure 2, l'extrémité en forme de crochet 13 est configurée en forme de redan. Plus particulièrement, cette extrémité 13 du loquet 11 comporte un chanfrein 21. Celui-ci, en coopération avec le bord de l'extrémité 22 de l'anse 2 au moment d'engager sur cette dernière le dispositif de préhension amovible 1, conduit à repousser le loquet 11 en direction de sa positon de déverrouillage dans son logement 12, contre l'action desdits moyens de rappel élastique 20.

Inversement, cette extrémité en forme de crochet 13 comporte encore un rebord d'accrochage 23 qui, lorsqu'il vient se positionner aux droits de l'ouverture oblongue 5 dans l'anse 2 plonge dans cette ouverture 5 sous l'impulsion des moyens de rappel élastique 20 en formant redan.

A noter également que, de manière avantageuse, le loquet 11 comporte encore un rebord de butée 24 contre lequel vient buter le bord d'extrémité 22 de l'anse 2 limitant, en quelque sorte, l'engagement de cette dernière dans le logement 7. Ce rebord de butée 24 est ménagé, par rapport au rebord d'accrochage 23, à une distance correspondant, à un jeu fonctionnel près, à la distance séparant le bord de l'extrémité 22 de l'ouverture oblongue 5 de l'anse 2.

A noter que sous l'effet d'une pression d'engagement du dispositif de préhension 1 sur l'anse 2, l'action du bord d'extrémité 22 de cette dernière sur ce rebord de butée 24 a pour conséquence, du fait de la géométrie du loquet 11, de repousser celui-ci dans sa position de verrouillage 14 et à le maintenir dans cette position.

Selon l'invention, le dispositif de préhension amovible 1 comprend, en combinaison et indépendamment de la fonction de verrouillage et déverrouillage, au moins un patin de retenue 27, 28 venant s'étendre au moins partiellement dans le logement 7 en forme de fente. Ainsi, ce ou ces patins de retenues 27, 28 définissent, dans ce logement 7, au moins une section de passage 31, 32 ajustée, avec une tolérance négative, à l'épaisseur 4 de l'anse 2.

Selon un mode d'exécution un patin de retenue 27, 28 s'étend au moins partiellement dans le logement 7 au travers d'une ouverture 29, 30 adaptée dans le boitier 6.

Par ailleurs, au moins ce patin de retenue 27, 28, dans sa partie au moins venant s'étendre dans ledit logement 7, est réalisé en un matériau élastiquement déformable pour s'effacer sous contrainte au passage de l'anse 2 lors de l'engagement dudit dispositif 1 sur cette dernière.

Selon l'invention, le dispositif de préhension amovible comprend encore au moins une butée élastiquement déformable 33 venant, là encore, s'étendre au moins en partie dans ledit logement 7. Contre cette butée élastiquement déformable 33 vient en appui sous contrainte le bord d'extrémité 22 de l'anse 2, ceci lorsque le dispositif de préhension amovible 1 est monté sur cette anse 2 et que les moyens d'accrochage 10 sont en position de verrouillage, notamment en coopération avec l'ouverture oblongue 5 de cette anse 2 dans les modes de réalisation illustrés dans les figures.

Avantageusement, sur le boitier 6 est monté au moins un cache de protection 25, 26, préférentiellement, mais non nécessairement, en matériau isolant.

Selon un premier mode d'exécution préféré, visible dans les figures 2 à 6, ce ou ces caches de protections sont équipés du ou des patins de retenue 27, 28 et/ou de la ou des butées élastiquement déformables 33.

Si les patins de retenue 27, 28 ont pour fonction de supprimer le jeu fonctionnel entre le dispositif de préhension amovible 1 et une anse 2 ceci dans une direction perpendiculaire au plan de cette anse 2, dite verticale, la ou les butées élastiquement déformables 33 ont pour fonction d'absorber le jeu fonctionnel de ce dispositif de préhension amovible 1 par rapport à l'anse 2 suivant une direction parallèle au plan de cette dernière.

En se référant plus particulièrement aux figures 3 à 5 ,illustrant, dans le cadre d'une première réalisation préférentielle, différents modes d'exécution de l'invention , on voit que de part et d'autre du boitier 6 est monté un cache de protection en matériau isolant, respectivement 25, 26.

Ces caches de protection 25, 26 peuvent être montés sur ce boitier 6 par collage, sertissage et/ou par l'intermédiaire d'organes de fixation, tels que vis, rivets ou similaires.

Toutefois, selon un mode de réalisation avantageux, un cache de protection 25 comporte des moyens d'emboitement et/ou clippage 34 sur des moyens d'emboitement et/ou clippage complémentaires 35 que comporte le cache de protection 26 du côté opposé et/ou le boitier 6.

A titre d'exemple de réalisation, ces moyens 34, 35 sont illustrés dans ces figures 3 à 5 sous forme de plots 37 prévus pour venir s'engager dans des logements 38 ménagés, selon le cas, dans un cache de protection 26 et/ou au niveau du boitier 6.

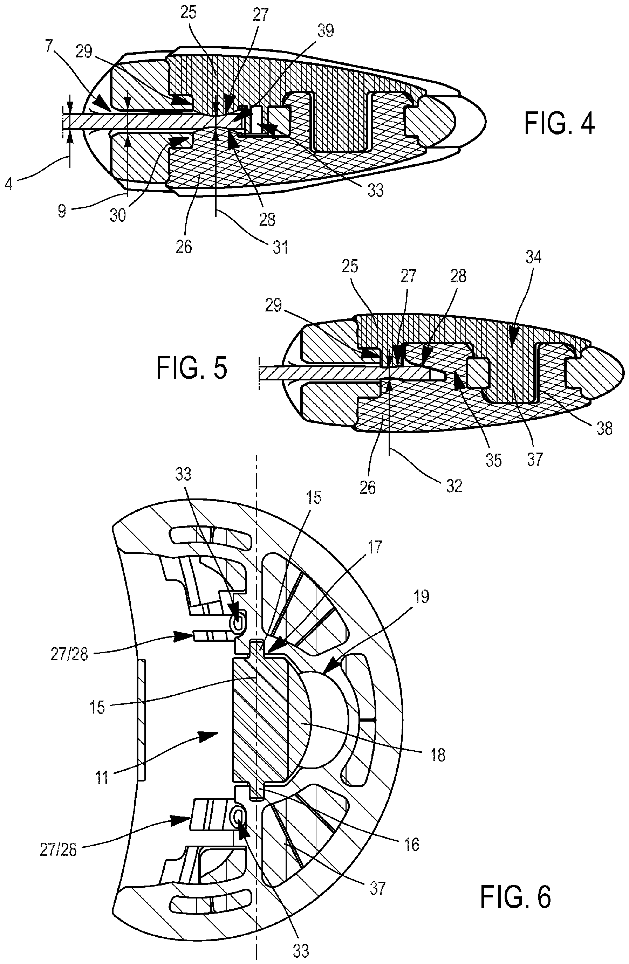

Dans les figures 4 et 6, il est illustré un mode d'exécution où chacun de ces caches de protection 25, 26 comporte un patin de retenue 27, 28 s'engageant partiellement dans le logement 7 de part et d'autre de ce dernier en créant, localement, un étranglement 39 au passage de l'anse 2 en vue de supprimer le jeu fonctionnel entre cette dernière et le dispositif de préhension 1 dans la direction perpendiculaire au plan de ladite anse 2.

Dans la figure 5 les caches de protection 25, 26 définissent, respectivement, des patins de retenue 28 s'engageant partiellement d'un même côté dans le logement 7 en définissant une largeur de passage 32 ajustée avec une tolérance négative par rapport à l'épaisseur 4 de l'anse 2.

Quant à la butée élastiquement déformable 33, elle peut se présenter, substantiellement, sous forme d'un pion élastiquement déformable associé à l'un au moins des caches de protection 25, 26 pour venir s'étendre au moins partiellement dans le logement 7 de manière à former une butée au bord d'extrémité 22 de l'anse 2, au moment d'insérer sur cette dernière le dispositif de préhension amovible 1.

Selon une autre particularité de la présente invention, le dispositif de préhension amovible 1 comporte au moins un patin de retenue 27, 28 agissant, dans les conditions précédemment évoquées, sur l'anse 2, de part et d'autre d'un plan médian 41 du dispositif de préhension amovible 1.

Plus particulièrement, au moins un patin de retenue 27, 28 agit sur l'anse 2, de part et d'autre du loquet 11 lorsque le dispositif de préhension amovible 1 est emboité sur cette anse 2.

De la même manière, selon un mode d'exécution préférentiel, le dispositif de préhension amovible 1 comporte au moins une butée élastiquement déformable 33 susceptible de coopérer avec le bord d'extrémité 22 de l'anse 2, de part et d'autre du plan médian 41, en somme de part et d'autre du loquet 11 dans le mode de réalisation illustré.

Selon ces différents modes d'exécution de l'invention, le ou les patins de retenue 27, 28 et/ou la ou les butées élastiquement déformables 33 sont conçus en un matériau élastiquement déformable synthétique, par exemple en silicone.

D'ailleurs, le ou les caches de protection 25, 26 sont réalisés en matériau synthétique élastiquement déformable, notamment en silicone.

Selon encore une autre particularité avantageuse de l'invention, les caches de protections 25, 26 sont symétrique par rapport au plan médian transversale 41. En somme, il s'agit de pièces identiques résultant d'un même moule de fabrication.

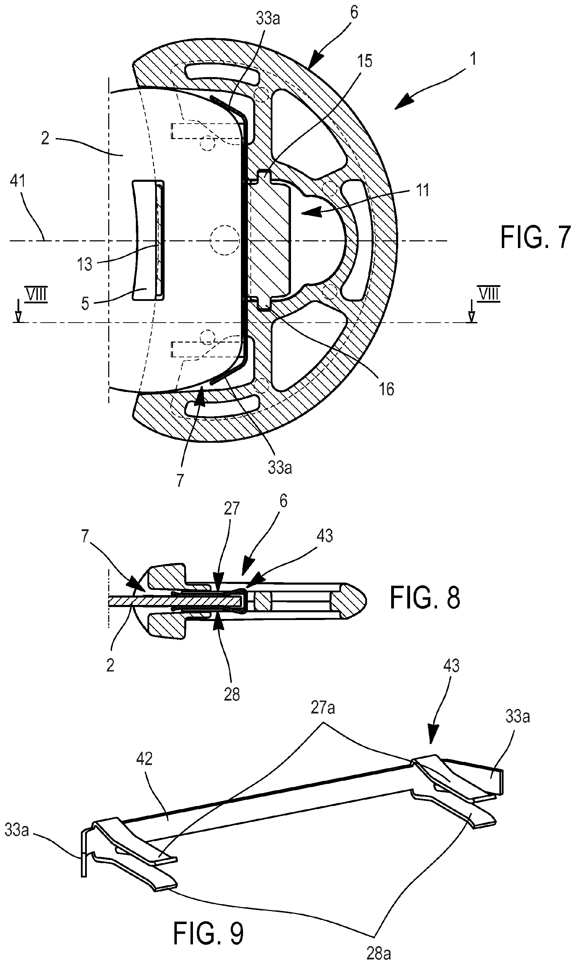

Il convient d'observer que si dans les modes d'exécution décrits plus haut et illustré dans les figures 2 à 6, les patins de retenue 27, 28 et les butées élastiquement déformables 33 sont associés aux caches de protection 25, 26, l'on pourrait tout à fait envisager un mode de réalisation où ils en sont dissociés, comme souhaite le représenter les figures 7 à 9 illustrant un second mode d'exécution de l'invention.

En particulier, et comme visible sur ces figures, ils peuvent encore prendre la forme de lames élastiques 27a, 28a, 33a, métalliques ou en matière plastique.

En particulier, ces lames élastiques 27a, 28a définissant ces patins de retenue 27, 28 viennent, là encore, s'étendre au moins partiellement, au travers d'au moins une ouverture 29, 30 adaptée dans le boitier 6, dans le logement 7 en forme de fente, ceci pour définir dans ce dernier, au moins une section de passage 31, 32 ajustée, avec une tolérance négative, à l'épaisseur 4 de l'anse 2.

Quant à la lame 33a définissant une butée élastiquement déformable 33, elle s'étend également au moins en partie dans ledit logement 7. Contre cette lame 33a élastiquement déformable vient en appui sous contrainte le bord d'extrémité 22 de l'anse 2, ceci lorsque le dispositif de préhension amovible 1 est monté sur cette anse 2 et que les moyens d'accrochage 10 sont en position de verrouillage.

De manière avantageuse, les lames 27a, 28a et 33a, correspondant, respectivement aux patins de retenue 27, 28 et à une butée 33, peuvent être reliée par une lame de jonction 42, de manière à ne constituer qu'une seule et même pièce 43 pour faciliter son montage dans le logement 7 du dispositif de préhension amovible 1.

Comme pour le mode de réalisation précédent, une construction symétrique est envisageable, voire souhaitable. Ainsi, le dispositif de préhension amovible 1 comporte au moins un patin de retenue 27, 28, sous forme d'une lame 27a, 28a, agissant, dans les conditions précédemment évoquées, sur l'anse 2, de part et d'autre d'un plan médian 41 du dispositif de préhension amovible 1.

Plus particulièrement, au moins une lames 27a, 28a agit sur l'anse 2, de part et d'autre du loquet 11 lorsque le dispositif de préhension amovible 1 est emboité sur cette anse 2.

De la même manière, le dispositif de préhension amovible 1 comporte au moins une butée élastiquement déformable 33 sous forme d'une lame 33a susceptible de coopérer avec le bord d'extrémité 22 de l'anse 2, de part et d'autre du plan médian 41, en somme de part et d'autre du loquet 11 dans le mode de réalisation illustré.

Ainsi, est comme visible dans la figure 9, la lame de jonction 42 porte à chacune de ses extrémités, d'une part une paires de lames 27a, 28a, formant les patins de retenue 27 et 28 et une lame 33a, correspondant à la butée élastiquement déformable 33.

Comme déjà indiqué plus haut cette pièce 43 peut être réalisée en matière plastique ou métallique, choisie pour son élasticité.

De manière non visible sur les figures 7 et 8, un ou des caches de protection 25, 26 peuvent être montés sur le boitier 6, tout comme dans le mode de réalisation correspondant aux figures 2 à 6.

Les avantages découlant de la présente invention consiste en ce que tout en conservant les jeux fonctionnels, mécaniquement nécessaires pour garantir, dans tous les cas, l'emboitement du dispositif de préhension amovible sur une anse d'ustensile de cuisine, tenant compte des tolérances de fabrication, ce jeu fonctionnel est rendu imperceptible par l'usager d'où découle, habituellement, un manque d'assurance, voire un risque de déversement de l'ustensile de cuisine.

## Revendications

1. Dispositif de préhension amovible pour anse 2 en forme d'oreille d'ustensile de cuisine 3, comportant un boitier 6 comprenant un logement 7 sous forme d'une fente de hauteur 9 adaptée à l'épaisseur 4 de l'anse 2 pour accueillir au moins en partie cette dernière par emboitement et avec un jeu fonctionnel, ce boitier 6 étant encore pourvu d'un loquet 11 apte à occuper au moins une position verrouillée 14 et une position déverrouillée pour, selon le cas, bloquer ou débloquer le dispositif de préhension amovible 1 sur cette anse 2, **caractérisée en ce qu'**il comprend, en combinaison et indépendamment de la fonction de verrouillage/déverrouillage, au moins un patin de retenue 27, 28 venant s'étendre au moins partiellement dans le logement 7 en forme de fente de manière à définir dans ce dernier au moins une section de passage 31, 32 ajustée, avec une tolérance négative, à l'épaisseur 4 de l'anse 2, au moins ce patin 27, 28, dans sa partie au moins venant s'étendre dans ledit logement 7, étant réalisé en un matériau élastiquement déformable pour s'effacer sous contrainte au passage de l'anse 2 lors de l'engagement dudit dispositif 1 sur cette dernière.

2. Dispositif selon la revendication 1, **caractérisé en ce qu'**il comprend au moins une butée élastiquement déformable 33 venant s'étendre au moins en partie dans ledit logement 7 et contre laquelle vient en appui sous contrainte le bord d'extrémité 22 de l'anse 2, lorsque ledit dispositif 1 est monté sur l'anse 2 et que les moyens d'accrochage 10 sont en position de verrouillage.

3. Dispositif selon les revendications 1 et 2, **caractérisé en ce que** le ou les patins de retenue 27, 28 définissent des moyens de suppression le jeu fonctionnel entre le dispositif de préhension amovible 1 et une anse 2, ceci dans une direction perpendiculaire au plan de cette anse 2, la ou les butées élastiquement déformables 33 constituant des moyens absorbant le jeu fonctionnel de ce dispositif de préhension amovible 1 par rapport à l'anse 2 suivant une direction parallèle au plan de cette dernière.

4. Dispositif selon l'une quelconque des revendications précédentes, **caractérisé en ce qu'**il comporte au moins un patin de retenue 27, 28 s'engageant partiellement dans le logement 7 de part et d'autre de ce dernier en créant, localement, un étranglement 39 au passage de l'anse 2 pour supprimer le jeu fonctionnel entre cette dernière et le dispositif de préhension 1 dans la direction perpendiculaire au plan de ladite anse 2.

5. Dispositif selon l'une quelconque des revendications 1 à 4, **caractérisé en ce qu'**il comporte des patins de retenue 28 s'engageant partiellement d'un même côté dans le logement 7 en définissant dans ce dernier une largeur de passage 32 ajustée avec une tolérance négative par rapport à l'épaisseur 4 de l'anse 2.

6. Dispositif selon la revendication 2, **caractérisé en ce qu'**une butée élastiquement déformable 33 se présente, substantiellement, sous forme d'un pion élastiquement déformable venant s'étendre au moins partiellement dans le logement 7 de manière à former une butée au bord d'extrémité 22 de l'anse 2.

7. Dispositif selon l'une quelconque des revendications précédentes, caractérisé en qu'il comporte au moins un patin de retenue 27, 28 agissant de part et d'autre d'un plan médian 41 dudit dispositif de préhension amovible 1.

8. Dispositif selon la revendication 2 ou 6, caractérisé en qu'il comporte au moins une butée élastiquement déformable 33 agissant de part et d'autre d'un plan médian 41 dudit dispositif de préhension amovible 1.

9. Dispositif selon l'une quelconque des revendications précédentes, **caractérisé en ce que** sur le boitier 6 est monté au moins un cache de protection 25, 26 par collage, sertissage et/ou par l'intermédiaire d'organes de fixation, tels que vis, rivets ou similaires.

10. Dispositif selon la revendication 9, **caractérisé en ce qu'**il comporte un cache de protection 25, 26 monté de part et d'autre du boitier 6.

11. Dispositif selon l'une quelconque des revendications 9 à 10, **caractérisé en ce que** le ou les caches de protections sont équipés du ou des patins de retenue 27, 28 et/ou de la ou des butées élastiquement déformables 33.

12. Dispositif selon l'une quelconque des revendications 9 à 11, **caractérisé en ce que** les caches de protections 25, 26 sont symétrique par rapport au plan médian transversale 41.

13. Dispositif selon l'une quelconque des revendications 1 à 10, caractérisé en que les patins de retenue 27, 28 prennent la forme de lames élastiques 27a, 28a, venant s'étendre au moins partiellement, au travers d'au moins une ouverture 29, 30 adaptée dans le boitier 6, dans le logement 7 en forme de fente, ceci pour définir dans ce dernier, au moins une section de passage 31, 32 ajustée, avec une tolérance négative, à l'épaisseur 4 de l'anse 33a, métalliques ou en matière plastique.

14. Dispositif selon la revendication 2 ou 6, caractérisé en que les butées élastiquement déformables 33 prennent la forme de lames 33a s'étendant au moins en partie dans ledit logement 7, contre cette lame 33a élastiquement déformable venant en appui, sous contrainte, le bord d'extrémité 22 de l'anse 2.

15. Dispositif selon les revendications 13 et 14, caractérisé en que les lames 27a, 28a et 33a, correspondant, respectivement aux patins de retenue 27, 28 et aux butées 33 sont reliée par une lame de jonction 42, de manière à constituer une même pièce 43.

16. Dispositif selon l'une quelconque des revendications précédentes, dont le loquet 11 est monté dans un logement adapté 12 dans le boitier 6 de manière basculante autour d'un axe 15 sensiblement parallèle au plan du logement 7, ce loquet comprenant encore une extrémité 13, en forme de crochet, pour coopérer, notamment en position de verrouillage 14 et sous l'action de moyens de rappel élastique 20, avec une ouverture oblongue 5 dans l'anse 2, **caractérisé en ce que** l'axe de basculement 15 est défini par des tronçons d'axe 16 s'étendant de part et d'autre sur les bords latéraux du loquet 11 et venant prendre position dans des logements formant paliers 17 de structure en V au fond desquels sont repoussés ces tronçons d'axe 16 sous l'action des moyens de rappel élastique 20 sur le loquet 11.

## Patentansprüche

1. Entfernbare Greifvorrichtung für Henkel 2 in Form eines Griffs eines Küchengeräts 3, umfassend ein Gehäuse 6, umfassend eine Aufnahme 7 in Form eines Schlitzes mit einer Höhe 9, die an die Dicke 4 des Henkels 2 angepasst ist, um mindestens einen Teil dieses Letzteren durch Ineinandergreifen und mit einem funktionellen Spiel aufzunehmen, wobei dieses Gehäuse 6 auch mit einem Schnäpper 11 versehen ist, der ausgelegt ist, um mindestens eine verriegelte Position 14 und eine entriegelte Position einzunehmen, um gegebenenfalls die entfernbare Greifvorrichtung 1 auf diesem Henkel 2 zu blockieren und zu entblockieren, **dadurch gekennzeichnet, dass** sie, in Kombination mit und unabhängig von der Verriegelungs-/Entriegelungsfunktion, mindestens eine Rückhaltekufe 27, 28, umfasst, die sich mindestens teilweise in der Aufnahme 7 in Form eines Schlitzes erstreckt, um in diesem Letzteren mindestens einen Durchgangsabschnitt 31, 32 zu definieren, der, mit einer negativen Toleranz, an die Dicke 4 des Henkels 2, angepasst ist, wobei mindestens diese Kufe 27, 28, in ihrem Teil, der sich mindestens in der Aufnahme 7 erstreckt, aus einem elastisch verformbaren Material hergestellt ist, um unter Vorspannung an den Durchgang des Henkels 2 beim Eingriff der Vorrichtung 1 auf diesem Letzteren zu verschwinden.

2. Vorrichtung nach Anspruch 1, **dadurch gekennzeichnet, dass** sie mindestens einen elastisch verformbaren Anschlag 33 umfasst, die sich mindestens teilweise in der Aufnahme 7 erstreckt, und gegen den unter Vorspannung der Endrand 22 des Henkels 2 aufliegt, wenn die Vorrichtung 1 auf dem Henkel 2 montiert ist, und dass sich die Befestigungsmittel 10 in der Verriegelungsposition befinden.

3. Vorrichtung nach Anspruch 1 und 2, **dadurch gekennzeichnet, dass** der oder die Rückhaltekufen 27, 28 Mittel zur Beseitigung des funktionellen Spiels zwischen der entfernbaren Greifvorrichtung 1 und einem Henkel 2 definieren, dies in einer senkrechten Richtung zur Ebene dieses Henkels 2, wobei der oder die elastisch verformbaren Anschläge 33 Mittel darstellen, die das funktionelle Spiel dieser entfernbaren Greifvorrichtung 1 mit Bezug auf den Henkel 2 gemäß einer parallelen Richtung zur Ebene dieses Letzteren absorbieren.

4. Vorrichtung nach einem beliebigen der vorhergehenden Ansprüche, **dadurch gekennzeichnet, dass** sie mindestens eine Rückhaltekufe 27, 28 umfasst, die teilweise in die Aufnahme 7 auf beiden Seiten dieser Letzteren eingreift, indem sie lokal eine Verengung 39 im Durchgang des Henkels 2 erzeugt, um das funktionelle Spiel zwischen diesem Letzteren und der Greifvorrichtung 1 in der Richtung senkrecht zur Ebene des Henkels 2 zu unterdrücken.

5. Vorrichtung nach einem beliebigen der Ansprüche 1 bis 4, **dadurch gekennzeichnet, dass** sie Rückhaltekufen 28 umfasst, die teilweise auf einer gleichen Seite in die Aufnahme 7 eingreifen, indem sie in dieser Letzteren eine Durchgangsbreite 32 definieren, die mit einer negativen Toleranz mit Bezug auf die Dicke 4 des Henkels 2 angepasst ist.

6. Vorrichtung nach Anspruch 2, **dadurch gekennzeichnet, dass** ein elastisch verformbarer Anschlag 33 im Wesentlichen die Form eines elastisch verformbaren Stifts aufweist, die sich mindestens teilweise in der Aufnahme 7 erstreckt, um einen Anschlag am Endrand 22 der Henkels 2 zu bilden.

7. Vorrichtung nach einem beliebigen der vorhergehenden Ansprüche, **dadurch gekennzeichnet, dass** sie mindestens eine Rückhaltekufe 27, 28 umfasst, die auf beiden Seiten einer mittleren Ebene 41 der entfernbaren Greifvorrichtung 1 wirkt.

8. Vorrichtung nach Anspruch 2 oder 6, **dadurch gekennzeichnet, dass** sie mindestens einen elastisch verformbaren Anschlag 33 umfasst, der auf beiden Seiten einer mittleren Ebene 41 der entfernbaren Greifvorrichtung 1 wirkt.

9. Vorrichtung nach einem beliebigen der vorhergehenden Ansprüche, **dadurch gekennzeichnet, dass** auf dem Gehäuse 6 mindestens eine Schutzmaske 25, 26 durch Kleben, Falzen und/oder mit Hilfe von Fixierungsorganen wie z. B. Schrauben, Nieten oder Ähnlichem montiert ist.

10. Vorrichtung nach Anspruch 9, **dadurch gekennzeichnet, dass** sie eine Schutzmaske 25, 26, umfasst, die auf beiden Seiten des Gehäuses 6 montiert ist.

11. Vorrichtung nach einem beliebigen der Ansprüche 9 bis 10, **dadurch gekennzeichnet, dass** die Schutzmaske oder die Schutzmasken mit der oder den Rückhaltekufe(n) 27, 28 und/oder dem oder den elastisch verformbaren Anschlag/Anschlägen 33 ausgestattet sind.

12. Vorrichtung nach einem beliebigen der Ansprüche 9 bis 11, **dadurch gekennzeichnet, dass** die Schutzmasken 25, 26 symmetrisch mit Bezug auf die mittlere Querebene 41 sind.

13. Vorrichtung nach einem beliebigen der Ansprüche 1 bis 10, **dadurch gekennzeichnet, dass** die Rückhaltekufen 27, 28 die Form von elastischen Lamellen 27a, 28a annehmen, die sich mindestens teilweise über mindestens eine Öffnung 29, 30, die im Gehäuse 6 angepasst ist, in der Aufnahme 7 in Form eines Schlitzes erstrecken, dies um in diesem Letzteren mindestens einen Durchgangsabschnitt 31, 32 zu definieren, der mit einer negativen Toleranz an die Dicke 4 des Henkels 33a metallisch oder aus Kunststoffmaterial, angepasst ist,

14. Vorrichtung nach Anspruch 2 oder 6, **dadurch gekennzeichnet, dass** die elastisch verformbaren Anschläge 33 die Form von Lamellen 33a annehmen, die sich mindestens teilweise in der Aufnahme 7 erstrecken, wobei gegen diese elastisch verformbare Lamelle 33a unter Vorspannung der Endrand 22 des Henkels 2 aufliegt.

15. Vorrichtung nach Anspruch 13 und 14, **dadurch gekennzeichnet, dass** die Lamellen 27a, 28a und 33a, die jeweils den Rückhaltekufen 27, 28 und den Anschlägen 33 entsprechen, durch eine Verbindungslamelle 42 vereinigt sind, um ein einziges Stück 43 darzustellen.

16. Vorrichtung nach einem beliebigen der vorhergehenden Ansprüche, wobei der Schnäpper 11 in einer Aufnahme 12 montiert ist, die im Gehäuse 6 auf schwenkende Weise um eine im Wesentlichen parallele Achse 15 zur Aufnahmeebene 7 angepasst ist, wobei dieser Schnäpper auch ein Ende 13 in Form eines Hakens umfasst, um, insbesondere in der Verriegelungsposition 14 und unter der Einwirkung von elastischen Rückstellmitteln 20, mit einer länglichen Öffnung 5 im Henkel 2 zusammenzuarbeiten, **dadurch gekennzeichnet, dass** die Schwenkachse 15 durch Achsenabschnitte 16 definiert ist, die sich auf beiden Seiten auf den seitlichen Rändern 11 des Schnäppers 11 erstrecken und sich in den Aufnahmen, die V-förmige Strukturabsätze 17 bilden, an deren Grund diese Achsabschnitte 16 unter der Einwirkung der elastischen Rückstellmittel 20 auf dem Schnäpper 11 zurückgestoßen werden, positionieren.

## Claims

1. A removable gripping device for an ear-shaped handle 2 of a kitchen utensil 3, comprising a case 6 including a housing 7 in the form of a slot 9 with a height suitable for the thickness 4 of the handle 2 in order to accommodate at least part of the latter by fitting and with functional play, this case 6 also being provided with a latch 11 able to occupy at least a locked position 14 and an unlocked position in order, depending on the case, to block or unblock the removable gripping device 1 on said handle 2, **characterized in that** it includes, in combination and independently of the locking/unlocking function, at least one retaining tab 27, 28 extending at least partially in the slot-forming housing 7 so as to define, in the latter, at least one passage section 31, 32 adjusted, with a negative allowance, to the thickness 4 of the handle 2, at least said tab 27, 28, in its part at least extending in said housing 7, being made from a resiliently deformable material to retract under stress upon passage of the handle 2 during the engagement of said device 1 over the latter.

2. The device according to claim 1, **characterized in that** it includes at least one resiliently deformable stop 33 extending at least partially in said housing 7 and against which the end edge 22 of the handle 2 bears under stress, when said device 1 is mounted on the handle 2 and the hooking means 10 are in the locked position.

3. The device according to claims 1 and 2, **characterized in that** the retaining tab(s) 27, 28 define means for suppressing the functional play between the removable gripping device 1 and a handle 2, in a direction perpendicular to the plane of said handle 2, the resiliently deformable stop(s) 33 making up means absorbing the functional play of said removable gripping device 1 relative to the handle 2 along a direction parallel to the plane of the latter.

4. The device according to any one of the preceding claims, **characterized in that** it comprises at least one retaining tab 27, 28 engaging partially in the housing 7 on either side of the latter while creating, locally, a choke 39 at the passage of the handle 2 in order to eliminate the functional play between the latter and the gripping device 1 in the direction perpendicular to the plane of said handle 2.

5. The device according to any one of claims 1 to 4, **characterized in that** it comprises retaining tabs 28 engaging partially on a same side in the housing 7 while defining, in the latter, an adjusted passage width 32 with a negative allowance relative to the thickness 4 of the handle 2.

6. The device according to claim 2, **characterized in that** a resiliently deformable stop 33 substantially assumes the form of a resiliently deformable pin extending at least partially in the housing 7 so as to form a stop at the end edge 22 of the handle 2.

7. The device according to any one of the preceding claims, **characterized in that** it comprises at least one retaining tab 27, 28 acting on either side of a median plane 41 of said removable gripping device 1.

8. The device according to claim 2 or 6, **characterized in that** it comprises at least one resiliently deformable stop 33 acting on either side of a median plane 41 of said removable gripping device 1.

9. The device according to any one of the preceding claims, **characterized in that** at least one protective cover 25, 26 is mounted on the case 6 by gluing, crimping and/or via fastening members, such as screws, rivets or the like.

10. The device according to claim 9, **characterized in that** it comprises a protective cover 25, 26 mounted on either side of the case 6.

11. The device according to any one of claims 9 to 10, **characterized in that** the protective cover(s) are equipped with the retaining tab(s) 27, 28 and/or the resiliently deformable stop(s) 33.

12. The device according to any one of claims 9 to 11, **characterized in that** the protective cover(s) 25, 26 are symmetrical relative to the transverse median plane 41.

13. The device according to any one of claims 1 to 10, **characterized in that** the retaining tabs 27, 28 assume the form of resilient strips 27a, 28a, extending at least partially, through at least one suitable opening 29, 30 in the case 6, in the slot-forming housing 7, in order to define, in the latter, at least one passage section 31, 32 adjusted, with a negative allowance, to the thickness 4 of the handle 33a, made from metal or plastic.

14. The device according to claim 2 or 6, **characterized in that** the resiliently deformable stops 33 assume the form of strips 33a extending at least partially in said housing 7, against said resiliently deformable strip 33a bearing, under stress, against the end edge 22 of the handle 2.

15. The device according to claims 13 and 14, **characterized in that** the strips 27a, 28a and 33a, respectively corresponding to the retaining tabs 27, 28 and the stops 33 are connected by a junction strip 42, so as to make up a same part 43.

16. The device according to any one of the preceding claims, whereof the latch 11 is mounted in an appropriate housing 12 in the case 6 so as to tilt around an axis 15 substantially parallel to the plane of the housing 7, this latch further including an end 13, in the form of a hook, in order to cooperate, in particular in the locked position 14 and under the action of resilient return means 20, with an oblong opening 5 in the handle 2, **characterized in that** the tilting axis 15 is defined by axis segments 16 extending on either side on the side edges of the latch 11 and being positioned in bearing-forming housings 17 with a V-shaped structure at the bottom of which these axis segments 16 are pushed back under the action of the resilient return means 20 on the latch 11.
